# EUROPÄISCHE PATENTANMELDUNG

(11) **EP 4 141 730 A1**
(43) Veröffentlichungstag der Anmeldung: **01.03.2023**
(21) Anmeldenummer: 21194155.4
(22) Anmeldetag: 31.08.2021
(51) Int. Cl.: G06F 30/27, G06N 3/04, G06N 20/20, G06F 111/02

(54) **COMPUTER-IMPLEMENTIERTES VERFAHREN UND SYSTEM ZUR ERZEUGUNG EINES GERÄTE-MODELLS ZUR BESCHREIBUNG EINES TECHNISCHEN GERÄTS**

(71) Anmelder: Siemens Aktiengesellschaft, 80333 München (DE)
(72) Erfinder: Meixner, Sebastian, 1030 Wien (AT); Schall, Daniel, 2020 Hollabrunn (AT); Hiessl, Thomas, 1050 Wien (AT)
(74) Vertreter: Maier, Daniel Oliver

(57) **Zusammenfassung**

Computer-implementiertes Verfahren zur Erzeugung eines Geräte-Modells zur Beschreibung eines technischen Geräts, umfassend:
a) Ermitteln eines ersten Modell-Parameters (RD) für das technische Gerät durch einen ersten Klienten (C1),
b) Berechnen einer ersten Modell-Beschreibung sowie eines aggregierten ersten Modell-Parameters (CSM) aus dem einen ersten Modell-Parameter (C1) und Bereitstellen (TEE) an eine verbundene Rechen-Vorrichtung (EE),
a1) Ermitteln eines zweiten Modell-Parameters für das technische Gerät durch einen zweiten Klienten (C2),
b1) Berechnen einer zweiten Modell-Beschreibung sowie eines aggregierten zweiten Modell-Parameters aus dem zweiten Modell-Parameter und Bereitstellen an die verbundene Rechen-Vorrichtung (EE),
c) Bestimmen einer Gruppenzuordnung (CC) für den aggregierten ersten und den aggregierten zweiten Modell-Parameter und Bestimmen des Geräte-Modells auf Basis maschinellen Lernens mittels der Gruppenzuordnung und der Modell-Beschreibungen durch die Rechen-Vorrichtung (EE), wobei die Gruppenzuordnung (CC) anhand eines Vergleichs mit einem vorbestimmten Grenzwert von statistischen Kenngrößen erfolgt, welche aus den aggregierten Modell-Parametern ermittelt werden.

## Beschreibung

Die Erfindung betrifft ein computer-implementiertes Verfahren und ein System zur Erzeugung eines Geräte-Modells zur Beschreibung eines technischen Geräts.

Ferner betrifft die Erfindung, eine computer-implementierte Datenstruktur, eine Verwendung der Datenstruktur, ein Computerprogramm, einen elektronisch lesbaren Datenträger und ein Datenträgersignal.

Federated Learning (kurz "FL") ist eine maschinelle Lerntechnik (kurz "ML"), die einen Algorithmus auf mehreren dezentralen Edge-Geräten trainiert, welche lokale Datenproben enthalten, ohne diese auszutauschen. Es werden lediglich Parameter des trainierten Modells weitergegeben, da diese keinen Rückschluss auf die Rohdaten zulassen.

Dieser Ansatz steht im Gegensatz zu herkömmlichen zentralisierten maschinellen Lerntechniken, bei denen alle lokalen Datensätze zentral auf einen Server hochgeladen werden.

Federated Learning ermöglicht es mehreren Akteuren, ein gemeinsames, robustes Modell für maschinelles Lernen aufzubauen, ohne Daten auszutauschen, wodurch kritische Probleme wie Datenschutz, Datensicherheit, Datenzugriffsrechte und Zugriff auf heterogene Daten gelöst werden können.

Die Anwendungen sind auf eine Reihe von Branchen verteilt, darunter IoT ("Internet-of-Things"), Pharmazie, Verteidigung und Telekommunikation.

Im Stand der Technik ist bekannt, dass Cluster auf den Originaldaten basieren. Es ist möglich, die Clients einfach anhand einer Stichprobe der Originaldaten zu clustern. Dies ist jedoch keine Option, wenn Kunden ihre Originaldaten nicht weitergeben möchten (was einer der Gründe ist, warum föderiertes Lernen überhaupt verwendet wird).

Es ist Aufgabe der Erfindung eine Lösung für föderiertes Lernen bereitzustellen, insbesondere für eine Gruppenzuordnung, welches eine Privatsphäre beziehungsweise einen Datenschutz für die Rohdaten bietet. Mit anderen Worten soll ein FL-Modell ohne Kenntnis der Rohdaten erzeugbar sein.

Die Aufgabe wird durch ein Verfahren eingangs genannter Art gelöst, umfassend die Schritte:
a) Ermitteln zumindest eines ersten Modell-Parameters (RD) für ein Modell auf Basis maschinellen Lernens für ein erstes technisches Gerät durch einen ersten Klienten,
b) Berechnen einer ersten Modell-Beschreibung sowie eines aggregierten ersten Modell-Parameters aus dem zumindest einen ersten Modell-Parameter durch den ersten Klienten und Bereitstellen an eine verbundene Rechen-Vorrichtung,
   a1) Ermitteln zumindest eines zweiten Modell-Parameters auf Basis maschinellen Lernens für zumindest ein zweites technisches Gerät durch zumindest einen zweiten Klienten,
   b1) Berechnen zumindest einer zweiten Modell-Beschreibung sowie zumindest eines aggregierten zweiten Modell-Parameters aus dem zumindest einen zweiten Modell-Parameter durch den zumindest einen zweiten Klienten und Bereitstellen an die verbundene Rechen-Vorrichtung,
c) Bestimmen einer Gruppenzuordnung für den aggregierten ersten und den zumindest einen aggregierten zweiten Modell-Parameter und Bestimmen des Geräte-Modells auf Basis maschinellen Lernens unter Anwendung der Gruppenzuordnung und der jeweiligen Modell-Beschreibung durch die Rechen-Vorrichtung,
wobei die Gruppenzuordnung anhand eines Vergleichs mit einem vorbestimmten Grenzwert von statistischen Kenngrößen erfolgt, welche aus dem aggregierten ersten und dem zumindest einen aggregierten zweiten Modell-Parameter ermittelt werden.

Die Erfindung beruht darauf, dass nicht direkt Rohdaten zur Bestimmung einer Gruppenzuordnung verwendet werden, sondern lediglich statistische Kenngrößen der Rohdaten.

Das Ermitteln zumindest eines ersten Modell-Parameters umfasst eine Erfassung von Rohdaten, beispielsweise durch eine Mess-Vorrichtung für eine Erfassung von elektrischen oder mechanischen Kenngrößen, wie Spannung oder Drehmoment, oder auch Eigenschaften von Medien, wie Temperatur oder Strömungen, etc., die der Klient umfasst.

Die Modell-Beschreibung kann beispielweise durch die Gewichte eines entsprechenden ML-Modells erfolgen und ist durch eine Aggregation aus Modell-Parametern dementsprechend anonymisiert.

Insgesamt können daher sowohl die Modell-Beschreibung als auch der aggregierte Modell-Parameter als anonym angesehen werden.

Mit anderen Worten ist durch die Modell-Beschreibung als auch durch den aggregierte Modell-Parameter kein Rückschluss auf die Modell-Parameter beispielsweise für die Rechen-Vorrichtung möglich.

Der Klient ist beispielsweise eine Kommunikations- und Rechen-Vorrichtung mit einem Speicher an einer Edge in einer Client-Server-Architektur.

Es ist günstig, wenn die Rechen-Vorrichtung nicht im ersten Klienten angeordnet ist.

Die Rechen-Vorrichtung kann logisch vom ersten Klienten getrennt angeordnet sein.

Die Rechen-Vorrichtung kann physisch auch im ersten Klienten liegen, jedoch beispielsweise in einem anderen virtuellen Netzwerk oder durch eine informationstechnische Sicherheitsvorrichtung getrennt, wie eine Firewall.

Diese Methode eignet sich insbesondere für FL-Modelle, denn dort ist eine Anonymisierung der Rohdaten ein wichtiges Kriterium für den Einsatz in der Praxis, den beteiligte Betreiber von Geräten wollen nicht immer Rohdaten aus dem Betrieb oder der Produktion von Produkten aus deren Domäne preisgeben.

Da die Lösung Merkmale eliminiert, die wenig bis keine Unterscheidungsmerkmale aufweisen, wird die Bestimmung der Kohorten des föderierten Lernsystems durch die Erfindung zusätzlich auch genauer.

Mit anderen Worten kann das erzeugte ML-Modell präziser werden und daraus ermittelte Betriebszustandsprognosen können beispielsweise genauer sein.

Dadurch wird es möglich, eine bessere Modell-Leistung zu erzielen, da nur diejenigen Clients zusammengruppiert werden, deren Daten sich ausreichend von den anderen Clustern unterscheiden.

Um diesen Vorteil von besseren Kohorten zu erreichen werden zuerst Merkmale eliminiert, welche nicht nützlich sind, um einzelnen Gruppen von Klienten mithilfe einer Bestimmung der Standardabweichung des Merkmals über alle Klienten zu unterscheiden. Ein solches Merkmal wird nicht weiter berücksichtigt, sofern die Standardabweichung unter einem vorgegebenen Schwellwert liegt.

Das Verfahren arbeitet mit aggregierten Merkmalen, das heißt solche, die den Originaldatensatz nicht preisgeben, und daher die Privatsphäre erhalten und somit nicht dem ursprünglichen Zweck des föderierten Lernens entgegenwirken.

Die aggregierten Daten können in Form eines anonymen globalen ML-Modells an andere Klienten weitergegeben werden, wodurch eine Erzeugung und ein Trainieren eines ML-Modells eines weiteren Klienten vereinfacht und verkürzt werden kann und Kostenvorteile entstehen.

Die Auswertungs- beziehungsweise Rechen-Vorrichtung, kann in einem Server angeordnet sein, oder alternativ selbst ein FL-Klient sein, welcher beispielsweise durch ein Auswahl-Protokoll ausgewählt wird.

Dementsprechend kann das erfindungsgemäße Verfahren auch auf ein Peer-to-Peer-FL-System angewendet werden.

In einer Weiterbildung der Erfindung ist es vorgesehen, ein Verfahren zum Betrieb eines dritten technischen Geräts mit einem Modell bereitzustellen, das erfindungsgemäß erzeugt wird, wobei ferner folgender Schritt umfasst ist:
d) Übermitteln und Anwenden des Modells aus Schritt c) beim Betrieb des ersten technischen Geräts mittels des ersten Klienten oder eines weiteren Geräts, welches mit dem Server mittels eines weiteren Klienten verbunden ist.

Dadurch wird ein Verfahren zum Betrieb eines technischen Geräts mit einem globalen Modell erhalten, das nach dem vorhergehenden Verfahren erzeugt wird.

Unter dem Anwenden des genannten globalen Modells wird auch das Erzeugen und Trainieren verstanden, das durch die Verwendung des Modells aus dem vorhergehenden Schritt c) deutlich vereinfacht werden kann.

Das erste, das zumindest eine zweite und das dritte technische Gerät sind baugleich., was bedeutet, dass die Geräte sich im Betrieb gleich verhalten.

Baugleich kann bedeuten, dass die Geräte aus derselben Produktion stammen, oder auch nur dieselben Konstruktionsmerkmale aufweisen.

Das erste und zweite technische Gerät kann auch unabhängig und in anderer Weise voneinander betrieben werden.

So kann beispielsweise ein Elektromotor in einer ersten Anwendung als Antriebsmotor mit variabler Umdrehungszahl in einer CNC-Fräsmaschine, und in einer zweiten Anwendung als Pumpenmotor mit konstanter Umdrehungs-Geschwindigkeit eingesetzt werden, wobei beide Motoren durch dasselbe ML-Modell beschrieben werden können.

Durch die Gruppierung wird eine Auswahl jener anonymen Modelle ermöglicht, welche nach vorbestimmten Kriterien, wie etwa einer Gewichtung von Beiträgen am Modell, oder ab einem, nach einem Kriterium sich von anderen Beiträgen unterscheidenden anonymen Modell.

In den meisten industriellen föderierten Lernsystemen ist es von großer Bedeutung, dass die einzelnen Clients in "Kohorten" gruppiert werden.

Dadurch kann das System das Problem der sogenannten "Nicht-IID"-Daten (engl. "Independent and Identically Distributed") überwinden, das heißt Nicht-IID-Daten sind vorhanden, wenn zwei oder mehr einzelne Clients heterogene Klassenlabel- oder Eingabedatenverteilungen haben.

Dies ist in einer industriellen Umgebung aufgrund von Unterschieden in Bezug auf Anlagen, beispielsweise nach Typen, Alter usw. und Betriebsbedingungen häufig der Fall. Ein praktisches Beispiel wären zwei Motoren A und B, bei denen sowohl Drehmoment, Temperatur als auch Strom aufgezeichnet werden. Für Motor A gibt es mehr Daten für ein loses Lager und wenig Daten für eine abnehmende Riemenspannung, während es für Motor B umgekehrt ist. Durch die gemeinsame Nutzung ihrer Daten kann es möglich werden, beide Fälle für beide Motoren besser vorherzusagen.

Das Gruppieren beziehungsweise "Clustern" in Kohorten ist konzeptionell dasselbe wie das Clustern der Klienten, und für diese Aufgabe können Standard-Clustering-Algorithmen, wie beispielsweise k-means, verwendet werden.

Der Föderationsserver föderiert Modelle basierend auf diesen Kohorten, das heißt Klienten aus einer bestimmten Kohorte werden nur zum Modell dieser Kohorte beitragen und Updates für dieses erhalten.

Je besser die Aufteilung der einzelnen Klienten in die Kohorten ist, also je ähnlicher sie sind und je mehr Klienten in einer Kohorte vorhanden sind, aber nicht unähnlich sind, desto besser kann die Föderation erwartet werden.

Dies basiert auf der Tatsache, dass die kombinierten Modelle umso besser sind, je ähnlicher sich zwei Clients sind. Je mehr Clients an einer Kohorte teilnehmen, desto mehr individuelle Updates können kombiniert werden, um die Modellqualität weiter zu verbessern.

Manchmal können viele Funktionen bei allen Clients einer bestimmten föderierten Lernpopulation sehr ähnlich sein, während nur ein kleiner Satz von Funktionen charakteristisch ist.

Aufgrund des Multi-Dimensionalitäts-Problems beim Clustering kann dies zu großen Clustern unterschiedlicher Clients führen und die Ähnlichkeit verzerren, indem Merkmale berücksichtigt werden, die keine Unterscheidung zwischen der Gesamtpopulation ermöglichen.

Clustering kann also genauer sein, wenn nur die charakteristischen Merkmale berücksichtigt und andere eliminiert werden, was die Bildung von Clustern in einem niedriger-dimensionalen Raum erleichtert.

In einer Weiterbildung der Erfindung ist es vorgesehen, dass der Server jeweils verbundenen Klienten eine Information über die Gruppenzuordnung bereitstellt.

Dadurch ist es beispielsweise für einen Klienten möglich festzustellen, ob der Klient selbst oder auch welche anderen Klienten in einem globalen ML-Modell berücksichtigt und aufgenommen wurden.

Diese Information kann beispielweise für ein Abrechnungsmodell verwendet werden, bei welchem relevante Beiträge zu einem globalen Modell lizensiert oder kommerziell vergütet werden, oder auch um eine Rückmeldung zu geben, ob die Daten einen nützlichen Beitrag geleistet haben, um weitere anonyme Modellverbesserungen zu begründen und die Modelle weiter zu verbessern.

Aus der Kenntnis, welche anderen Klienten im Modell berücksichtigt wurden, kann beispielsweise ermittelt werden, welche Modellverbesserungen besonders effizient sind, insbesondere mit Kenntnis der Beschreibungen der Modell-Parameter der anderen Klienten, wie Kontext oder Metadaten zu den zugrunde liegenden Rohdaten.

Die Erfindung liefert also auch ein Verfahren zur verbesserten Gruppen-Zuordnung.

Um die Gruppen zu berechnen ist eine Verbindung zu einem Server nicht unbedingt notwendig.

Gruppen können sowohl in einem Klienten als auch in der Rechenvorrichtung berechnet werden.

In einer Weiterbildung der Erfindung ist es vorgesehen, dass aus dem aggregierten ersten und der aggregierte zumindest eine zweite Modell-Parameter ein aggregierter Gesamt-Parameter berechnet wird, welcher im Schritt c) angewandt wird.

Eine derartige zweistufige anonyme Daten-Aggregation erlaubt eine Verbesserung des globalen ML-Modells, indem statistische Ausprägungen weiter verbessert oder verstärkt werden können. Das globale Modell kann dadurch genauer oder auch aussagekräftiger sein.

Eine nachfolgende Anwendung des globalen Modells beim Betrieb eines technischen Geräts kann eine Verbesserung bei der Modellierung des technischen Geräts bewirken und einen genaueren, effizienteren oder auch vereinfachten Betrieb ermöglichen.

In einer Weiterbildung der Erfindung ist es vorgesehen, dass die Bestimmung der Gruppenzuordnung mithilfe der Standardabweichung und/oder der Kurtosis aus der Wahrscheinlichkeitsverteilung des jeweiligen Modell-Parameters für ein jeweiliges Modell erfolgt.

Dadurch wird auf einfache Weise eine Anonymisierung der Rohdaten durch eine statistische Maßnahme erreicht. Es können charakteristische Kenngrößen für das Verhalten des technischen Geräts erhalten werden, welche genau, aussagekräftig sind und außerdem sehr einfach zu bestimmen sind.

Dabei kann die Berechnung des jeweiligen aggregierten Modell-Parameters auf den aggregierten ersten Modell-Parameters und/oder auf den zumindest eines zweiten Modell-Parameter angewandt werden.

Dadurch ist es möglich, einen guten Indikator für die Eigenschaften der Rohdaten in ihrer Gesamtheit im Sinne einer "Unverwechselbarkeit" zu berücksichtigen, der eine eindeutige Abbildung der Rohdaten darstellt und wodurch eine Anonymisierung der Rohdaten erfolgt.

Die Kurtosis ist die Schärfe der Spitze einer Häufigkeitsverteilungskurve der Rohdaten heranzuziehen, welche beispielsweise über die Funktion der Ableitung der Häufigkeitsverteilungskurve ermittelt werden kann.

Die erfindungsgemäße Aufgabe wird auch durch eine computer-implementierte Datenstruktur in Form einer Matrix gelöst, umfassend Tupel, welche eine Anzahl von Merkmalen und eine Anzahl von aggregierten zweiten Modell-Parametern je Merkmal beinhalten.

Mit anderen Worten umfasst die Matrix Tupel der Größe N x M, wobei N die Anzahl der Merkmale ist und M die Anzahl der aggregierte zweite Modell-Parameter je Merkmal ist.

Durch die Matrix ist es möglich auf eine besonders einfache Weise anonymisierte Datensätze zu bestimmen, zu speichern und weiter zu verarbeiten, insbesondere für die nachfolgende Gruppierung.

Durch Anwendung der Matrix können interne Vorgänge verbessert und vereinfacht werden, sodass die Rechen-Vorrichtung auch auf einfachen Rechner-Plattformen, wie lokale Edge-Klienten oder virtuell auf einem Server integrierbar ist, ohne große Rechen- oder Speicher-Ressourcen zu benötigen.

Die erfindungsgemäße Aufgabe wird auch durch eine der erfindungsgemäßen Datenstruktur beim Erzeugen eines Modells auf Basis föderierten maschinellen Lernens ist.

Die erfindungsgemäße Aufgabe wird auch durch ein Computerprogramm gelöst, umfassend Befehle, welche bei deren Ausführung durch einen Computer diesen veranlassen, das erfindungsgemäße Verfahren auszuführen.

Ein Computerprogramm-Produkt aus dem erfindungsgemäßen Computerprogramm kann beispielsweise ein elektronisch lesbarer Datenträger mit darauf gespeicherten lesbaren Steuerinformationen oder ein Datenträgersignal sein.

Die erfindungsgemäße Aufgabe wird auch durch einen elektronisch lesbaren Datenträger mit darauf gespeicherten lesbaren Steuerinformationen gelöst, welche zumindest das Computerprogramm nach dem vorhergehenden Anspruch umfassen und derart ausgestaltet sind, dass sie bei Verwendung des Datenträgers in einer Recheneinrichtung das erfindungsgemäße Verfahren durchführen.

Die erfindungsgemäße Aufgabe wird auch durch ein Datenträgersignal gelöst, welches das erfindungsgemäße Computerprogramm überträgt.

Die erfindungsgemäße Aufgabe wird auch durch ein System zum Betrieb eines dritten technischen Geräts mit einem Modell und zumindest einem ersten, zumindest einen zweiten und einem dritten Klienten, welche jeweils mit einem technischen Gerät und einer Rechen-Vorrichtung verbunden sind, wobei das System dazu eingerichtet ist das erfindungsgemäße Verfahren auszuführen.

Die Rechen-Vorrichtung weist einen Speicher auf und kann in einem Server oder einem weiteren Klienten angeordnet sein, welche miteinander zur Kommunikation in Verbindung stehen.

Der Klient kann an einer Edge eines Client-Server-Systems gelegen sein.

Die Erfindung wird nachfolgend anhand eines in den beigeschlossenen Zeichnungen dargestellten Ausführungsbeispiels näher erläutert. In den Zeichnungen zeigt:
- Fig. 1: ein Flussdiagramm des erfindungsgemäßen Verfahrens und ein Ausführungsbeispiel für ein erfindungsgemäßes System,
- Fig. 2: ein Ausführungsbeispiel für das Verfahren nach Fig. 1.

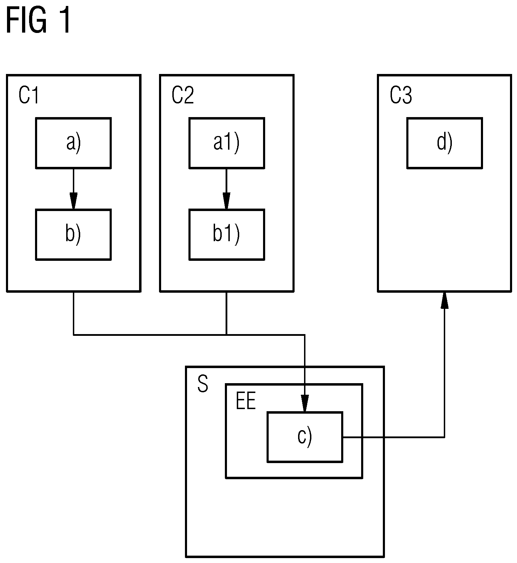

**Fig. 1** zeigt beispielhaft ein Flussdiagramm des erfindungsgemäßen Verfahrens kombiniert mit einem Ausführungsbeispiel für ein erfindungsgemäßes computer-implementiertes System.

Die Verfahrensschritt a) bis d) sind erkennbar.

Ein Server S kann mit Klienten C1-C3 kommunizieren.

Der Server S weist ferner eine Rechen-Vorrichtung EE mit einem Speicher auf, in welcher serverseitige Berechnungen durchgeführt werden.

Klienten C1-C3 weisen ferner jeweils eine eigene Rechen-Vorrichtung mit einem Speicher auf, welche ferner dazu eingerichtet ist, Daten eines jeweils angeschlossenen technischen Geräts (nicht eingezeichnet), zu erfassen und zu verarbeiten.

Die technischen Geräte der einzelnen Klienten C1-C3 sind baugleich und sollen durch ein gemeinsames ML-Modell betrieben werden, wobei durch das erfindungsgemäße Verfahren das Trainieren des ML-Modells vereinfacht werden soll.

Das erfindungsgemäße Verfahren zur Erzeugung eines Modells zur Beschreibung eines technischen Geräts, sowie zum Betrieb des dritten technischen Geräts mit dem Modell, umfasst die Schritte:
a) Ermitteln zumindest eines ersten Modell-Parameters für ein Modell auf Basis maschinellen Lernens für ein erstes technisches Gerät durch den ersten Klienten C1,
b) Berechnen eines ersten Modells mit ersten Modell-Gewichten sowie eines aggregierten ersten Modell-Parameters aus dem zumindest einen ersten Modell-Parameter durch den ersten Klienten C1 und Bereitstellen an eine verbundene Rechen-Vorrichtung EE,
   a1) Ermitteln zumindest eines zweiten Modell-Parameters auf Basis maschinellen Lernens für zumindest ein zweites technisches Gerät durch den zweiten Klienten C2,
   b1) Berechnen zumindest eines zweiten Modells mit zweiten Modell-Gewichten sowie zumindest eines aggregierten zweiten Modell-Parameters aus dem zumindest einen zweiten Modell-Parameter durch den zweiten Klienten C2 und Bereitstellen an die verbundene Rechen-Vorrichtung EE,
c) Bestimmen einer Gruppenzuordnung für den aggregierten ersten und den zumindest einen zweiten Modell-Parameter und Bestimmen eines Modells auf Basis maschinellen Lernens unter Anwendung der Gruppenzuordnung und des jeweiligen Modell-Gewichts durch die Rechen-Vorrichtung EE, wobei die Gruppenzuordnung anhand eines Vergleichs mit einem vorbestimmten Grenzwert von statistischen Kenngrößen erfolgt, welche aus dem ersten und dem zumindest einen zweiten Modell-Gewicht ermittelt werden.
d) Übermitteln und Anwenden des Modells aus Schritt c) beim Betrieb des dritten Geräts, welches mittels des dritten Klienten C3 mit der Rechen-Vorrichtung EE verbunden ist.

Alternativ zu diesem Ausführungsbeispiel kann die Auswertungsvorrichtung selbst ein FL-Klient sein, welcher beispielsweise durch ein Auswahl-Protokoll ausgewählt wird.

Dementsprechend kann das erfindungsgemäße Verfahren ebenso auf ein Peer-to-Peer-FL-System angewendet werden.

Dieser Aspekt ist jedoch nicht dargestellt.

In der gezeigten Form werden Rohdaten für ein ersten technisches Gerät, beispielsweise Stromaufnahme-Messdaten eines Elektromotors im Zeitbereich, von einem ersten Klienten C1 erfasst.

Der erste Klient C1 berechnet daraus mithilfe statistischer Verfahren beispielsweise die Standardabweichung F1A, F2A und Kurtosis F1B, F2B der Rohdaten.

Eine serverseitige Auswertungsvorrichtung empfängt dementsprechende Daten von allen verbundenen Klienten und berechnet vier Werte, nämlich die Standardabweichung F1AA, F2AA und die Kurtosis F1BA, F2BA über alle Klienten.

Anschließend werden jene Daten ausgefiltert, die nicht dazu beitragen, zwischen den Daten einzelner Klienten unterscheiden zu können.

Darauf basierend wird eine Gruppierung oder Gruppenzuordnung durchgeführt, beispielsweise mithilfe eines k-means-Verfahrens.

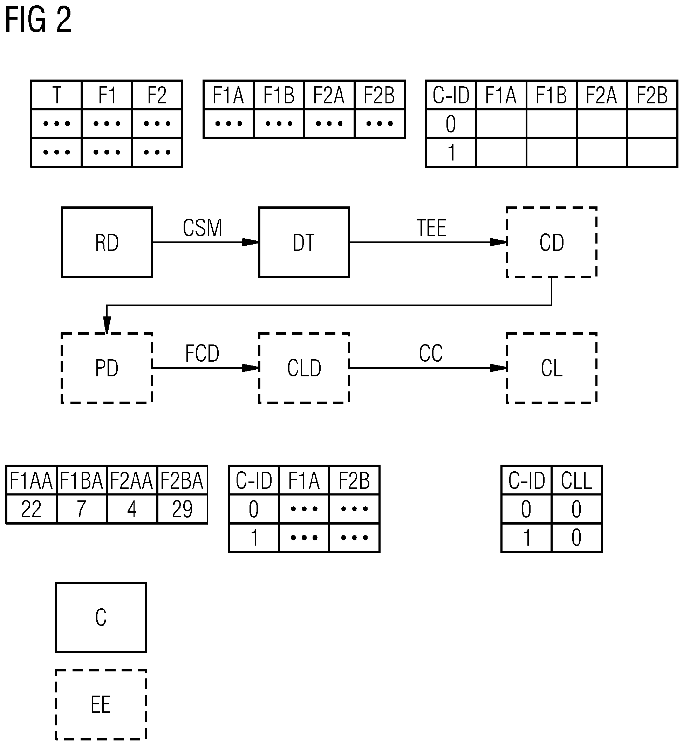

**Fig. 2** zeigt beispielhaft ein Ausführungsbeispiel des erfindungsgemäßen Verfahrens.

Ein Klient C, beispielsweise eine der Klienten C1-C3 aus der vorhergehenden Figur, ist mit einer durchgezogenen Umrandung dargestellt.

Eine Auswertungsvorrichtung EE (engl. "evaluation entity") ist mit einer strichlierten Umrandung dargestellt.

Die Auswertungsvorrichtung EE eine entsprechende Vorrichtung EE im Server S sein, jedoch alternativ auch an anderer Stelle, wie in einem Klienten, angeordnet sein.

Zunächst werden Rohdaten RD (engl. "raw data") über die Zeit T in Form einer Zeitreihe erfasst, welche Merkmale F1, F2 des technischen Geräts in Form von Messergebnissen beschreiben.

Die Rohdaten RD werden mithilfe statistischer Maßnahmen CSM (engl. "compute statistical measures") ausgewertet und Daten für den Transfer DT (engl. "data to transfer") erhalten.

Die statistischer Maßnahmen CSM sind in diesem Beispiel die Bestimmung der Standardabweichung F1A, F2A des jeweiligen Merkmals und der Kurtosis F1B, F2B des jeweiligen Merkmals.

Durch die Anwendung der Statistikfunktionen werden die Rohdaten RD anonymisiert, das heißt sie lassen keinen Rückbezug auf konkrete Messwerte zu.

Es erfolgt nun eine Übertragung TEE zur Auswertungsvorrichtung (engl. "transfer to evaluation entity"), beispielsweise in einem Server.

Dort werden die anonymen Daten gesammelt als gesammelte Daten CD (engl. "collected data") gespeichert.

Dabei werden auch Client Identifikations-Nummern C-ID bestimmt.

Es erfolgt eine Datenverarbeitung und verarbeitete Daten PD (engl. "processed data") werden erzeugt.

Dabei werden Standardabweichungen F1AA, F2AA der Standardabweichung F1A, F1B des jeweiligen Merkmals F1, F2 bestimmt.

Ferner werden Standardabweichung F1BA, F2BA der Kurtosis F1B, F2B des jeweiligen F1, F2 Merkmals bestimmt.

Es findet nun eine Filterung gesammelter Daten FCD (engl. "filter collected data") statt, um nur die relevanten Daten in weiterer Folge zu berücksichtigen.

Relevante Daten sind Daten, welche sich von anderen Daten anderer Quellen deutlich unterscheiden, also zumindest um einen vorbestimmten Grenzwert.

Anschließend findet eine Gruppierung CLD der Daten (engl. "clustering data") statt, indem Gruppen berechnet CC (engl. "compute clusters") werden.

Dabei wird ein Überschreiten eines Schwellwert auf die Standardabweichungen F1AA, F2AA, F1BA, F2BA festgestellt, wie beispielsweise ein Minimum des jeweiligen Werts von 20, um nur die charakteristischen Merkmale berücksichtigt und andere eliminiert werden, wodurch bei der Gruppenbildung eine hohe Aussagekraft eines berücksichtigten Beitrags erhalten wird.

Dadurch kann die Modell-Genauigkeit für eine Gruppe verbessert werden.

Bekannte ML-Verfahren zur Gruppierung, wie k-means sind dabei anwendbar.

Als Ergebnis liegen nun Gruppen CL (engl. "clusters") vor.

Dabei werden vorzugsweise Gruppennamen CLL (engl. "cluster label") bestimmt und zugeordnet.

### Bezugszeichenliste:

- C, C1-C3: Klient
- CC: Berechnung von Gruppen (engl. "compute clusters")
- CD: Gesammelte Daten (engl. "collected data")
- C-ID: Client Identifikations-Nummer
- CL: Gruppen (engl. "clusters")
- CLD: Gruppierung von Daten (engl. "clustering data")
- CLL: Gruppenname (engl. "cluster label")
- CSM: Berechnung statistische Maßnahmen (engl. "compute statistical measures")
- DT: Daten für den Transfer (engl. "data to transfer")
- EE: Auswertungsvorrichtung (engl. "evaluation entity"), Rechen-Vorrichtung
- F1, F2: Merkmal
- F1A, F2A: Standardabweichung von Merkmal
- F1AA, F2AA: Standardabweichung der Standardabweichung von Merkmal
- F1B, F2B: Kurtosis von Merkmal
- F1BA, F2BA: Standardabweichung der Kurtosis von Merkmal
- FCD: Filterung gesammelter Daten (engl. "filter collected data")
- PD: Verarbeitete Daten (engl. "processed data")
- RD: Rohdaten (engl. "raw data")
- S: Server
- T: Zeit
- TEE: Übertragung zur Auswertungsvorrichtung (engl. "transfer to evaluation entity")

## Patentansprüche

1. Computer-implementiertes Verfahren zur Erzeugung eines Geräte-Modells zur Beschreibung eines technischen Geräts, umfassend die Schritte:
a) Ermitteln zumindest eines ersten Modell-Parameters (RD) für ein Modell auf Basis maschinellen Lernens für ein erstes technisches Gerät durch einen ersten Klienten (C1),
b) Berechnen einer ersten Modell-Beschreibung sowie eines aggregierten ersten Modell-Parameters (CSM) aus dem zumindest einen ersten Modell-Parameter durch den ersten Klienten (C1) und Bereitstellen (TEE) an eine verbundene Rechen-Vorrichtung (EE)
a1) Ermitteln zumindest eines zweiten Modell-Parameters auf Basis maschinellen Lernens für zumindest ein zweites technisches Gerät durch zumindest einen zweiten Klienten (C2),
b1) Berechnen zumindest einer zweiten Modell-Beschreibung sowie zumindest eines aggregierten zweiten Modell-Parameters aus dem zumindest einen zweiten Modell-Parameter durch den zumindest einen zweiten Klienten (C2) und Bereitstellen an die verbundene Rechen-Vorrichtung (EE),
c) Bestimmen einer Gruppenzuordnung für den aggregierten ersten und den zumindest einen aggregierten zweiten Modell-Parameter und Bestimmen des Geräte-Modells auf Basis maschinellen Lernens unter Anwendung der Gruppenzuordnung und der jeweiligen Modell-Beschreibung durch die Rechen-Vorrichtung (EE),
wobei die Gruppenzuordnung (CC) anhand eines Vergleichs mit einem vorbestimmten Grenzwert von statistischen Kenngrößen erfolgt, welche aus dem aggregierten ersten und dem zumindest einen aggregierten zweiten Modell-Parameter ermittelt werden.

2. Verfahren zum Betrieb eines dritten technischen Geräts mit einem Modell, das nach dem vorhergehenden Anspruch erzeugt wird, wobei ferner folgender Schritt umfasst ist:
d) Übermitteln und Anwenden des Modells aus Schritt c) beim Betrieb des dritten Geräts, welches mittels eines dritten Klienten (C3) mit der Rechen-Vorrichtung (EE) verbunden ist.

3. Verfahren nach dem vorhergehenden Anspruch, wobei die Rechen-Vorrichtung (EE)jeweils verbundenen Klienten eine Information über die erfolgte Gruppenzuordnung bereitstellt.

4. Verfahren nach einem der vorhergehenden Ansprüche, wobei die Bestimmung der Gruppenzuordnung mithilfe der Standardabweichung (F1A, F2A, F1AA, F2AA, F1BA, F2BA) und/oder der Kurtosis (F1B, F2B) aus der Wahrscheinlichkeitsverteilung des jeweiligen Modell-Parameters für ein jeweiliges Modell erfolgt.

5. Computer-implementierte Datenstruktur in Form einer Matrix, umfassend Tupel, welche eine Anzahl von Merkmalen und eine Anzahl von aggregierten zweiten Modell-Parametern je Merkmal beinhalten.

6. Verwendung der Datenstruktur nach dem vorhergehenden Anspruch beim Erzeugen eines Modells auf Basis föderierten maschinellen Lernens ist.

7. Computerprogramm, umfassend Befehle, welche bei deren Ausführung durch einen Computer diesen veranlassen, das Verfahren nach einem der Ansprüche 1 bis 7 auszuführen.

8. Elektronisch lesbarer Datenträger mit darauf gespeicherten lesbaren Steuerinformationen, welche zumindest das Computerprogramm nach dem vorhergehenden Anspruch umfassen und derart ausgestaltet sind, dass sie bei Verwendung des Datenträgers in einer Recheneinrichtung das Verfahren nach einem der Ansprüche 1 bis 7 durchführen.

9. Datenträgersignal, welches das Computerprogramm nach Anspruch 10 überträgt.

10. System zum Betrieb eines dritten technischen Geräts mit einem Modell und zumindest einem ersten, zumindest einen zweiten und einem dritten Klienten (C1-C3), welche jeweils mit einem technischen Gerät und einer Rechen-Vorrichtung (EE) verbunden sind, wobei das System dazu eingerichtet ist das Verfahren nach einem der Ansprüche 2 bis 7 auszuführen.
